# EUROPÄISCHE PATENTANMELDUNG

(11) **EP 0 701 020 A2**
(43) Veröffentlichungstag der Anmeldung: **13.03.1996**
(21) Anmeldenummer: 95111063.4
(22) Anmeldetag: 14.07.1995
(51) Int. Cl.: D21H 21/16, C08F 220/24, D21H 17/34

(54) **Öl- und wasserabweisende Papiere, Verfahren zu ihrer Herstellung und neue fluorhaltige Copolymerisate hierzu**

(30) Priorität: 27.07.1994 DE 4426537; 27.07.1994 DE 4426536
(71) Anmelder: BAYER AG, D-51368 Leverkusen (DE)
(72) Erfinder: Michels, Gisbert, Dr., D-51061 Köln (DE); König, Joachim, Dr., D-51519 Odenthal (DE); Zweering, Uwe, Dr., D-40589 Düsseldorf (DE); Korte, Siegfried, Dr., D-51519 Odenthal (DE)

(57) **Zusammenfassung**

Öl- und wasserabweisende Papiere sind auf der Oberfläche oder in der Masse der Papiere ausgerüstet mit fluorhaltigen Copolymerisaten aus
a) Perfluoralkylgruppen enthaltenden Acrylaten der Formel CH₂=CR¹-COO-X-CₙF₂ₙ₊₁ (I),
b) Monomeren der Formel CH₂=CR²-COO-R³ (II),
c) Monomeren der Formel CH₂=CR⁴-COO-(CH₂CH₂O)ₘ-R⁵ (III),
d) Monomeren der Formel CH₂=CR⁶-COO-CH₂CH₂-N(R⁷,R⁸) (IVa)
   oder in salzartiger Form der Formel
   [CH₂=CR⁶-COO-CH₂CH₂-N(R⁷,R⁸,R⁹)]^{⊕}Y^{⊖} (IVb)
   oder in N-oxidierter Form der Formel 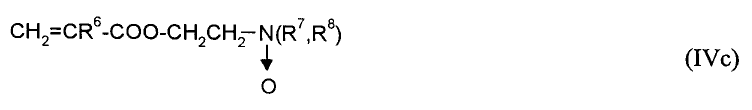 und
e) Monomeren der Formel CH₂=CR¹⁰CONHR¹¹ (V)
wobei die Substituenten und Indices in den Formeln die in der Beschreibung angegebene Bedeutung haben und wobei die Copolymerisate die Monomeren in Mengen von a) = 50 bis 90 Gew.-%, b) = 1 bis 35 Gew.-%, c) = 3 bis 20 Gew.-%, d) = 1 bis 20 Gew.-% und e) = 0 bis 10 Gew.-% enthalten. Solche Copolymere mit einem Gehalt von e) = 0,5 bis 10 Gew.-% sind neu.

## Beschreibung

Die Erfindung betrifft neue öl- und wasserabweisende Papiere, die auf der Oberfläche oder in der Masse mit den weiter unten beschriebenen fluorhaltigen Copolymerisaten ausgerüstet sind und ihre Herstellung. Die Erfindung betrifft weiterhin neue fluorhaltige Copolymerisate hierzu.

Fluorhaltige Ausrüstungsmittel auf der Basis von Perfluoralkylphosphat-Salzen weisen Nachteile bei der Herstellung von öl- und wasserabweisenden Papieren auf. So ist beispielsweise Ammonium-mono- und -bis-(N-ethylperfluoroctansulfonamidoethyl)-phosphat nur öl-, aber nicht wasserabweisend und versagt vor allem beim Einsatz in Hartwasser. Das Diethanolamin-Salz der Mono- und -bis-(1H,1H,2H,2H-perfluoralkyl)-phosphate zeigt zwar öl- und wasserabweisende Wirkung beim Einsatz auf der Papieroberfläche, beim Einsatz in der Papiermasse werden jedoch nur öl-, aber keine wasserabweisenden Eigenschaften beobachtet.

Fluorhaltige Copolymerisate nach US 4.366.299 stellen zwar gegenüber den obengenannten Fluorverbindungen bereits Verbesserungen dar, jedoch ist der herstellungsbedingte Anteil an Lösungsmitteln nachteilig, da er bei der Applikation wegen des sehr niedrigen Flammpunktes besondere Sicherheitsmaßnahmen notwendig macht.

Auch fluorhaltige Copolymerisate nach US 5.247.008 und daraus hergestellte wäßrige, lösungsmittelfreie Dispersionen können zur öl- und wasserabweisenden Ausrüstung von Papieren eingesetzt werden. Akzeptable Ergebnisse werden jedoch allenfalls bei der Ausrüstung auf der Oberfläche der Papiere erzielt; beim Einsatz in der Papiermasse werden dagegen deutlich verschlechterte Resultate erzielt.

Besonders gravierend macht sich dieser Nachteil bei Einsatz von Zellstoff auf Altpapierbasis bemerkbar.

Es bestand daher weiterhin das Bestreben, öl- und wasserabweisende Papiere zu finden, die durch den Einsatz von fluorhaltigen, lösungsmittelfreien Copolymerdispersionen sowohl auf der Oberfläche als auch in der Masse der Papiere ausgerüstet werden können, ohne die oben beschriebenen Nachteile zu entwickeln, wobei folgende Voraussetzungen erfüllt sein müssen:
- Es muß gewährleistet sein, daß die ausgerüsteten Papiere sowohl öl- als auch wasserabweisende Eigenschaften besitzen.
- Der Einsatz von nicht enthärtetem Leitungswasser bei der Ausrüstung der Papiere darf nicht zu Ausfällungen der fluorhaltigen Copolymerdispersionen oder zu Wirkungsverlusten bei der Öl- und Wasserabweisung führen.
- Die erfindungsgemäß einzusetzenden fluorhaltigen Copolymerdispersionen müssen sowohl beim Einsatz auf der Papieroberfläche als auch beim Einsatz in der Papiermasse zu guten Wirkungen führen.
- Es muß gewährleistet sein, daß Papiere auf Altpapierbasis öl- und wasserabweisend ausgerüstet werden können.

Es wurde nun überraschend gefunden, daß Copolymerdispersionen mit Copolymeren, bestehend aus Perfluoralkylgruppen enthaltenden Monomeren, hydrophilen Monomeren sowie weiteren Monomeren der unten beschriebenen Art geeignet sind für die Herstellung von öl- und wasserabweisenden Papieren und hierbei die obengenannten Voraussetzungen erfüllen, obwohl gegenüber dem genannten Stand der Technik nur Abweichungen vorliegen, die vermeintlich unbedeutend scheinen.

Die Erfindung betrifft daher öl- und wasserabweisende Papiere, ausgerüstet auf der Oberfläche oder in der Masse der Papiere mit fluorhaltigen Copolymerisaten aus
a) Perfluoralkylgruppen enthaltenden Acrylaten der Formel CH₂=CR¹-COO-X-CₙF₂ₙ₊₁ (I),
b) Monomeren der Formel CH₂=CR²-COO-R³ (II),
c) Monomeren der Formel CH₂=CR⁴-COO-(CH₂CH₂O)ₘ-R⁵ (III) und
d) Monomeren der Formel CH₂=CR⁶-COO-CH₂CH₂-N(R⁷,R⁸) (IVa)
   oder in salzartiger Form der Formel [CH₂=CR⁶-COO-CH₂CH₂-N(R⁷,R⁸,R⁹)]^{⊕}Y^{⊖} (IVb)
   oder in N-oxidierter Form der Formel 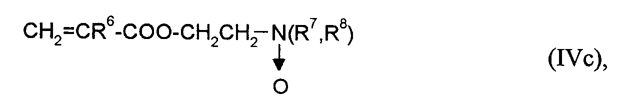
e) Monomeren der Formel CH₂=CR¹⁰CONHR¹¹ (V),

wobei in den Formeln
- n: eine Zahl von 4 bis 20, bevorzugt von 6 bis 16 oder ein Gemisch von verschiedenen Werten von n und
- m: eine Zahl von 3 bis 20 oder ein Gemisch von verschiedenen Werten von m bedeuten,
- X: für -(CH₂)ₒ-, SO₂NR¹²CH₂CHR¹³- oder -O-(CH₂)ₒ- steht, wobei o eine Zahl von 1 bis 4 bedeutet,
- R¹, R², R⁴, R⁶, R¹⁰ und R¹³: unabhängig voneinander Wasserstoff oder Methyl bedeuten,
- R³, R⁷, R⁸, R⁹ und R¹²: unabhängig voneinander geradkettiges oder verzweigtes C₁-C₄-Alkyl darstellen,
- R⁵: Wasserstoff oder geradkettiges oder verzweigtes C₁-C₈-Alkyl bedeutet und
- R¹¹: Wasserstoff, geradkettigtes oder verzweigtes C₁-C₁₂-Alkyl, Benzyl, -CH₂OH, -CH₂OCH₃, -CH₂OC₄H₉, -(CH₂)₃N(CH₃)₂ oder -(CH₂)N^{⊕}(CH₃)₃ Cl^{⊖} bedeutet und
- Y^{⊖}: ein Äquivalent eines 1-3 wertigen Anions bedeutet,
wobei die Copolymeriste die Monomeren in Mengen von a) = 50 bis 90 Gew.-%, b) = 1 bis 35 Gew.-%, c) = 3 bis 20 Gew.-%, d) = 1 bis 20 Gew.-% und e) = 0 bis 10 Gew.-%, alles bezogen auf die Gesamtmenge der Comonomeren, enthalten und wobei zur Ausrüstung auf der Oberfläche 0,1 bis 2,0 Gew.-% der obigen Copolymerisate, bezogen auf die Papiermasse, und zur Ausrüstung in der Masse der Zellstoffsuspension (Pulpe) 0,5 bis 2,0 Gew.-% der obigen Copolymerisate, bezogen auf die Papiermasse, eingesetzt werden, als Wasser nicht enthärtetes Leitungswasser eingesetzt werden kann und neben den obigen Copolymerisaten Stärke und Retentionsmittel eingesetzt werden können, wobei die Ausrüstungsmittel nach US 5.247.008 ausgenommen sind.

Die Ausrüstungsmittel von US 5 247 008 enthalten als Comonomere
a) 45-75 Gew.-% CₙH₂ₙ₊₁-X-OCO-CR¹ = CH₂,
b) 10-50 Gew.-% CH₂=CH-CO-OR⁴ und/oder CH₂=C(CH₃)-CO-OR¹²,
c) 4-30 Gew.-% CH₂=CR⁵-COO-(CHR⁶-CH₂O)ₚ-R⁷ und
d) 1-15 Gew.-% CH₂=CR¹¹-COO-CH₂-CH₂-N(R⁸, R⁹) oder [CH₂=CR¹¹-COO-CH₂CH₂-N(R⁸, R⁹, R¹⁰)]^{⊕}y^{⊕} oder 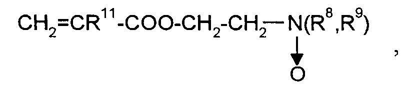
wobei in den Formeln
- X: für 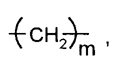 -SO₂-NR²-CH₂-CHR³- oder 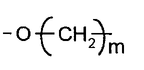 steht,
- n: eine Zahl von 4-12 und
- m: eine Zahl von 1-4 bedeuten,
- R¹, R³, R⁵, R⁶ und R¹¹: unabängig voneinander Wasserstoff oder Methyl darstellen,
- R², R⁸, R⁹ und R¹⁰: unabhängig voneinander C₁-C₄-Alkyl bedeuten,
- R⁴: C₁-C₂₂-Alkyl darstellen,
- R⁷: C₁-C₈-Alkyl darstellt,
- R¹²: C₂-C₂₂-Alkyl darstellt und
- Y^{⊖}: ein Äquivalent eines 1-3 wertigen Anions bedeutet,
und wobei weiterhin die Comonomere unter b) ganz oder teilweise durch eines oder mehrere aus der Gruppe von Styrol, Acrylnitril, Vinylacetat, Vinylpropionat und Methylmethacrylat ersetzt werden können.

Die Erfindung betrifft weiterhin ein Verfahren zur Herstellung öl- und wasserabweisender Papiere durch Ausrüstung auf der Oberfläche oder in der Masse der Papiere mit öl- und wasserabweisenden Substanzen, das dadurch gekennzeichnet ist, daß zur Ausrüstung fluorhaltige Copolymeriste der oben bezeichneten Art eingesetzt werden, worin n, m, R¹ bis R¹¹, X und Y^{⊖} den obigen Bedeutungsumfang haben, wobei zur Ausrüstung auf der Oberfläche 0,1 bis 2,0 Gew.-% der obigen Copolymerisate, bezogen auf die Papiermasse, und zur Ausrüstung in der Masse der Zellstoffsuspension (Pulpe) 0,5 bis 2,0 Gew.-% der obigen Copolymerisate, bezogen auf die Papiermasse, eingesetzt werden, als Wasser nicht enthärtetes Leitungswasser eingesetzt werden kann und neben den obigen Copolymerisaten Stärke und Retentionsmittel eingesetzt werden können und wobei der Einsatz von Copolymerisaten nach US 5 247 008 ausgenommen ist.

Die Erfindung betrifft schließlich neue fluorhaltige Copolymerisate aus
a) 50 bis 90 Gew.-% an Perfluoralkylgruppen enthaltenden Acrylaten der Formel CH₂=CR¹-COO-X-CₙF₂ₙ₊₁ (I),
b) 1 bis 35 Gew.-% an Monomeren der Formel CH₂=CR²-COO-R³ (II),
c) 3 bis 20 Gew.-% an Monomeren der Formel CH₂=CR⁴-COO-(CH₂CH₂O)ₘ-R⁵ (III),
d) 1 bis 20 Gew.-% an Monomeren der Formel CH₂=CR⁶-COO-CH₂CH₂-N(R⁷,R⁸) (IVa)
   oder in salzartiger Form der Formel [CH₂=CR⁶-COO-CH₂CH₂-N(R⁷,R⁸,R⁹)]^{⊕}Y^{⊖} (IVb)
   oder in N-oxidierter Form der Formel 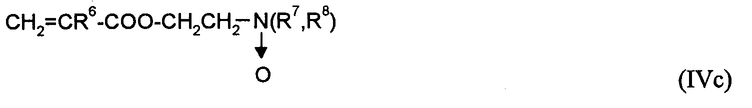 und
e) 0,5 bis 10 Gew.-% an Monomeren der Formel CH₂=CR¹⁰CONHR¹¹ (V)
wobei in den Formeln
- n: eine Zahl von 4 bis 20, bevorzugt von 6 bis 16 oder ein Gemisch von verschiedenen Werten von n und
- m: eine Zahl von 3 bis 20 oder ein Gemisch von verschiedenen Werten von m bedeuten,
- X: für -(CH₂)ₒ-, SO₂NR¹²CH₂CHR¹³- oder -O-(CH₂)ₒ- steht, wobei o eine Zahl von 1 bis 4 bedeutet,
- R¹, R², R⁴, R⁶, R¹⁰ und R¹³: unabhängig voneinander Wasserstoff oder Methyl bedeuten,
- R³, R⁷, R⁸, R⁹ und R¹²: unabhängig voneinander geradkettiges oder verzweigtes C₁-C₄-Alkyl darstellen,
- R⁵: Wasserstoff oder geradkettiges oder verzweigtes C₁-C₈-Alkyl bedeutet und
- R¹¹: Wasserstoff, geradkettiges oder verzweigtes C₁-C₁₂-Alkyl, Benzyl, -CH₂OH, -CH₂OCH₃, -CH₂OC₄H₉, -(CH₂)₃N(CH₃)₂ oder -(CH₂)N^{⊕}(CH₃)₃ Cl^{⊖} bedeutet und
- Y^{⊖}: ein Äquivalent eines 1-3 wertigen Anions bedeutet.

Zur Ausrüstung auf der Oberfläche werden die fertigen Papiere mit einer Dispersion der fluorhaltigen Copolymerisate behandelt; gegebenenfalls wird überschüssige Dispersion abgequetscht, und das behandelte Papier wird danach getrocknet.

Zur Ausrüstung in der Masse wird der Pulpe oder dem bereits geschöpften Papier fluorhaltiges Copolymerisat oder eine Dispersion hiervon zugesetzt, wodurch eine völlige Durchdringung der Papiermasse mit fluorhaltigem Copolymerisat erreicht wird. Nach diesem Zusatz wird der Vorgang der Papierherstellung in bekannter Weise fortgesetzt.

Der Feststoffgehalt und die Menge der Dispersionsmenge der anzuwendenden Copolymere wird in einer dem Fachmann geläufigen Weise so gewählt, daß der beabsichtigte Gehalt an fluorhaltigem Copolymer im Papier erreicht wird. Darüberhinaus ist der gesamte übrige Vorgang der Papierherstellung lange bekannt und bedarf keiner detaillierten Darstellung.

Die oben diskutierte US 5.247.008 offenbart Copolymere und Dispersionen hieraus, deren Monomer-Definitionen größtenteils außerhalb der obigen liegen und deren Zusammensetzungen bezüglich der Komponente a) deutlich zu tieferen Werten und bezüglich der Komponenten b) und c) deutlich zu höheren Werten hin verschoben sind, verglichen mit den obigen Definitionen. Die oben definierte Erfindung betrifft demgegenüber eine Auswahl; die Copolymere und Dispersionen von US 5.247.008 sind von der obigen Erfindung ausdrücklich ausgenommen.

Bevorzugte erfindungsgemäß ausgerüstete Papiere sind solche, in denen in den obigen Copolymerisaten der Substituent R² Wasserstoff bedeutet.

Ein weiterhin zur Ausrüstung bevorzugt eingesetztes Copolymer der obigen Art ist durch die Bedeutung R³ = Methyl ausgezeichnet.

Weitere bevorzugte erfindungsgemäße Papiere sind solche, zu deren Ausrüstung nicht enthärtetes Leitungswasser eingesetzt wird.

Unter den zur Ausrüstung gelangenden Copolymeren sind solche bevorzugt, die die Zusammensetzung a) 65 bis 85 Gew.-% (I), b) 2 bis 25 Gew.-% (II), c) 3 bis 15 Gew.-% (III) und d) 1 bis 10 Gew.-% (IV) besitzen, wobei wiederum Ausrüstungsmittel nach US 5.247.008 ausgenommen sind.

In besonders bevorzugter Weise besitzen die zur Ausrüstung eingesetzten Copolymerisate die Zusammensetzung a) >75 bis 85 Gew.-% (I), b) 3 bis 15 Gew.-% (II), c) 3 bis 15 Gew.-% (III) und d) 2 bis 8 Gew.-% (IV).

Die oben beschriebenen Copolymerisate werden zur Ausrüstung der erfindungsgemäßen Papiere in Form von wäßrigen, weitgehend oder vollständig lösungsmittelfreien Dispersionen eingesetzt, wobei die Dispersionen 5 bis 50 %, bevorzugt 10 bis 40 % ihres Gesamtgewichts an von Wasser verschiedenen Inhaltsstoffen (Feststoffgehalt) besitzen.

Weitere bevorzugte Copolymere sind in der Komponente a) durch den Index n gekennzeichnet, der Werte von 6, 8, 10, 12, 14 und 16 oder Gemische mehrerer von ihnen annimmt und im Falle von Gemischen einen Durchschnittswert von 8 bis 9 besitzt.

Weitere bevorzugte erfindungsgemäße Papiere sind durch den Einsatz von Copolymeren zur Ausrüstung gekennzeichnet, in deren Komponente c) R⁴ Methyl und R⁵ Wasserstoff bedeuten und in denen unabhängig hiervon der Index m Werte von 5 bis 9 annimmt.

Weitere bevorzugte Papiere sind solche, bei denen zur Ausrüstung Copolymere eingesetzt werden, in deren Komponente d) R⁷ und R⁸ Methyl und R⁹ Wasserstoff bedeuten und in deren salzartiger Form das Anion Y^{⊖} Chlorid, Acetat, 1/2 Sulfat, C₆-C₁₀-Aryl-, C₇-C₁₅-Aralkyl- oder C₁-C₁₈-Alkyl-sulfonat oder 1/3 Phosphat, bevorzugt 1/3 Phosphat bedeutet.

Bevorzugte erfindungsgemäße neue Copolymerisate sind solche, die die Zusammensetzung a) = 65 bis 85 Gew.-% (I), bevorzugt a) > 65 bis 85 Gew.-% (I), b) = 2 bis 25 Gew.-% (II), c) = 3 bis 15 Gew.-% (III), d) = 1 bis 10 Gew.-% (IV) und e) = 1 bis 8 Gew.-% (V) besitzen.

Bevorzugte erfindungsgemäße neue Copolymerisate sind weiterhin solche, in denen R¹ Wasserstoff, X -CH₂CH₂- und der Index n Werte von 6, 8, 10, 12, 14, 16 oder Gemische mehrerer von ihnen annimmt und im Falle von Gemischen einen Durchschnittswert von 8 bis 9 besitzt.

Weiterhin bevorzugte erfindungsgemäße neue Copolymerisate sind solche, in denen R³ Methyl bedeutet.

Weiterhin bevorzugte erfindungsgemäße neue Copolymerisate sind solche, in denen R⁴ Methyl, R⁵ Wasserstoff und der Index m unabhängig hiervon die Werte von 5 bis 9 annimmt.

Weiterhin bevorzugte erfindungsgemäße neue Copolymerisate sind solche, in denen R⁶, R⁷, R⁸ Methyl bedeuten und R⁹ für Wasserstoff, sowie das Anion Y^{⊖} für Chlorid, Acetat, 1/2 Sulfat, C₆-C₁₀-Aryl-, C₇-C₁₅-Aralkyl- oder C₁-C₈-Alkylsulfonat oder 1/3 Phosphat, bevorzugt 1/3 Phosphat steht.

Weiterhin bevorzugte erfindungsgemäße neue Copolymerisate sind solche, in denen R¹⁰ und unabhängig hiervon R¹¹ Wasserstoff bedeuten.

Die Mitverwendung von Acrylamid als Komponente e) in den erfindungsgemäßen Copolymerisatwen stellt eine weitere Verbesserung der aus der US-Patentschrift 5 247 008 bekannten fluorhaltigen Copolymerisaten dar.

Die erfindungsgemäßen neuen Copolymerisate können auch anderen Substraten, z.B. Textilien, Leder, mineralischen Substraten, öl- und wasserabweisende Eigenschaften verleihen.

Die Herstellung der zur Ausrüstung der erfindungsgemäßen Papiere eingesetzten Copolymerisate erfolgt z.B. durch gemeinsame Polymerisation der Monomeren (I), (II), (III) und (IVa, b oder c) in Lösung. Als Lösungsmittel können Essigsäureethylester, Essigsäurebutylester, Aceton, Methylethylketon, Methylisobutylketon, Ethanol, Isopropanol, tert.-Butanol und ähnliche eingesetzt werden, die dem Fachmann grundsätzlich bekannt sind. Bevorzugt wird in Aceton copolymerisiert.

Die Durchführung der Polymerisation kann hierbei diskontinuierlich oder kontinuierlich erfolgen; bei der diskontinuierlichen Fahrweise sind das Batch- bzw. Zulaufverfahren zu nennen.

Als Initiatoren für die Polymerisation werden Radikalbildner, wie beispielsweise Azoverbindungen oder Peroxide eingesetzt. Beispielsweise seien genannt: 2,2'-Azo-bis(isobutyronitril), 2,2'-Azo-bis(methylbutyronitril), tert.-Butylperpivalat und tert.-Amylperoxy-2-ethylhexanoat. Zur Regulierung des Molekulargewichts können Kettenübertragungsmittel, wie beispielsweise Dodecylmercaptan, eingesetzt werden.

Die Polymerisationstemperatur beträgt 40 bis 100°C, vorzugsweise 50 bis 90°C.

Die Herstellung von wäßrigen Dispersionen dieser Copolymerisate erfolgt so, daß man zur Lösung der Copolymerisate nach ihrer Herstellung Wasser hinzugibt und das Lösungsmittel mindestens teilweise, bevorzugt vollständig, abdestilliert. Wird bei der Herstellung der Copolymerisate die Komponente d) in Form von Monomeren der Formel (IVa) benutzt, so wird ein Neutralisationsmittel mit einem Anion Y^{⊖} der oben beschriebenen Art, in bevorzugter Weise Phosphorsäure, zusammen mit dem Wasser der Copolymerisatlösung zugesetzt.

Die Entfernung der Lösungsmittel kann beispielsweise bei erhöhter Temperatur (etwa 40 bis 90°C) im Vakuum durchgeführt werden. Es ist grundsätzlich möglich, einen größeren Teil des benutzten Lösungsmittels in den erfindungsgemäß eingesetzten Dispersionen zu belassen. Aus Gründen der Arbeitssicherheit und der Arbeitshygiene wird jedoch das Lösungsmittel bevorzugt soweit abdestilliert, daß der Flammpunkt der erhaltenen im wesentlichen wäßrigen Dispersion oberhalb von 100°C liegt. Die wäßrigen Dispersionen sind auch nach vollständiger Entfernung des Lösungsmittels stabil.

Die fluorhaltigen Copolymerdispersionen der oben beschriebenen Art können erfindungsgemäß sowohl auf der Papieroberfläche als auch in der Masse der Papiere eingesetzt werden. Geeignete Rohstoffe zur Herstellung der in der Masse ausgerüsteten Papiere können z.B. gebleichte und ungebleichte Zellstoffe, Holzstoffe, Altpapiere und Deinking-Stoffe sein. Die Papiere können z.B. sauer oder neutral hergestellt werden und übliche Zusatzstoffe wie z.B. Füllstoffe, Papierhilfsmittel (z.B. Retentions-, Fixierungs-, Naßfest-, Leimungsmittel), Farbstoffe und optische Aufheller enthalten. Geeignete Rohpapiere zur Ausrüstung auf der Oberfläche können aus den obengenannten Rohstoffen bestehen. Zur Ausrüstung der Papiere auf der Oberfläche werden Flotten angesetzt, die die fluorhaltige Wirksubstanz und gegebenenfalls Stärke und andere Zusatzstoffe wie z.B. Farbstoffe, optische Aufheller, Leimungsmittel und Naßfestmittel enthalten, wobei auf die gegenseitige Verträglichkeit in der Leimpressenflotte zu achten ist. Mit diesen Flotten werden Rohpapiere durch ein Foulard-Verfahren, z.B. in der Leimpresse, ausgerüstet und anschließend getrocknet. Bei Einsatz in der Papiermasse werden zur Zellstoffsuspension 0,5 bis 2,0 Gew.-%, bezogen auf die Papiermasse, an Wirksubstanz und vorzugsweise ein Retentionsmittel zugegeben. Danach wird das Papierblatt gebildet und anschließend getrocknet. Bei all diesen Vorgängen ist es möglich, nicht enthärtetes Leitungswasser einzusetzen, wodurch sich die Herstellung der erfindungsgemäß ausgerüsteten Papiere besonders wirtschaftlich gestaltet.

Der Einsatz von Methylacrylat als Komponente b) der zur Ausrüstung benutzten Copolymerisate führt bei der Ausrüstung der Papiere zu besonders guten Ergebnissen sowohl bei der Ausrüstung auf der Papieroberfläche als auch der Ausrüstung in der Papiermasse.

Um die öl- und wasserabweisende Wirkung der ausgerüsteten Papiere zu bewerten, werden folgende Testmethoden benutzt:
1. Die Wasserabweisung wird durch die Wasseraufnahme nach Cobb (DIN 53 132) bei einer Kontaktzeit von 60 Sekunden bestimmt.
2. Die Ölabweisung wird durch die Aufnahme von Terpentinöl (analog DIN 53 132) bei einer Kontaktzeit von ebenfalls 60 Sekunden bestimmt.
3. Eine weitere Testmethode zur Bestimmung der Ölabweisung wird so durchgeführt, daß auf die Oberfläche der ausgerüsteten Papiere jeweils ein Tropfen (0,05 ml) Terpentinöl bzw. Xylol aufgetragen werden. Es wird die Zeit bestimmt (bis maximal 180 min bzw. maximal 240 min), bis der Tropfen vollständig in das Papier eingedrungen ist. Je höher die gemessene Zeit ist, umso höher ist die ölabweisende Wirkung.

### Beispiele

### Herstellung der Fluorcarbondispersionen

### Beispiel I

Die Polymerisation wurde in einem Reaktor mit Thermometer, Rührer und Rückflußkühler durchgeführt. Dazu bereitete man eine Lösung aus
76,0 Gew.-Tle. CH₂=CHCOOCH₂CH₂CₙF₂ₙ₊₁ (Mischung mit n = 6, 8, 10, 12, 14, 16)
13,5 Gew.-Tle. Methylacrylat
7,5 Gew.-Tle. CH₂=C(CH₃)COO(CH₂CH₂O)₈H
3,0 Gew.-Tle. Dimethylaminoethylmethacrylat in
300,0 Gew.-Tle. Aceton.

Die Lösung wurde mit 2,25 Gew.-% tert.-Butylperpivalat (75 %ig) versetzt und unter Stickstoffatmosphäre 10 Stunden bei 56°C gerührt. Zur Polymerisatlösung, die auf 50°C abgekühlt wurde, wurde eine Lösung aus
1,2 Gew.-Tle. Phosphorsäure (85 %ig) in
300 Gew.-Tle. entionisiertem Wasser
zugegeben und verrührt. Das Aceton wurde destillativ bei 60°C/200 bis 300 mbar entfernt und der Feststoffgehalt der Dispersion auf 25,0 Gew.-% eingestellt.

### Beispiele II bis VII

In der gleichen Weise wie in Beispiel I wurden die Beispiele II bis VII durchgeführt, wobei die eingesetzten Monomere in der nachfolgenden Tabelle beschrieben sind:

| Monomere (Gew.-Tle.) | II | III | IV | V | VI | VII |
|---|---|---|---|---|---|---|
| CH₂=CHCOOCH₂CH₂CₙF₂ₙ₊₁ (Mischung mit n = 6, 8, 10, 12, 14, 16) | 80 | 85 | 76 | 78 | 78 | 78 |
| Methylacrylat | 9,5 | 4,5 | - | 6,5 | 7,5 | 8,5 |
| Methylmethacrylat | - | - | 13,5 | - | - | - |
| CH₂=C(CH₃)COO(CH₂CH₂O)₈H | 7,5 | 7,5 | 7,5 | 12,5 | 12,5 | 12,5 |
| Dimethylaminoethylmethacrylat | 3 | 3 | 3 | 3 | 2 | 1 |

### Beispiel VIII

Die Polymerisation wurde in einem Reaktor mit Thermometer, Rührer und Rückflußkühler durchgeführt. Dazu bereitete man eine Lösung aus
70,0 Gew.-Tle. CH₂=CHCOOCH₂CH₂CₙF₂ₙ₊₁ (Mischung mit n = 6, 8, 10, 12, 14, 16)
16,5 Gew.-Tle. Methylacrylat
7,5 Gew.-Tle. CH₂=C(CH₃)COO(CH₂CH₂O)₈H
3,0 Gew.-Tle. Dimethylaminoethylmethacrylat in
3,0 Gew.-Tle. Acrylamid
300,0 Gew.-Tle. Aceton.

Die Lösung wurde mit 2,25 Gew.-% tert.-Butylperpivalat (75 %ig) versetzt und unter Stickstoffatmosphäre 10 Stunden bei 56°C gerührt. Zur Polymerisatlösung, die auf 50°C abgekühlt wurde, wurde eine Lösung aus
1,2 Gew.-Tle. Phosphorsäure (85 %ig) in
300 Gew.-Tle. entionisiertem Wasser
zugegeben und verrührt. Das Aceton wurde destillativ bei 60°C/200 bis 300 mbar entfernt und der Feststoffgehalt der Dispersion auf 25,0 Gew.-% eingestellt.

### Beispiele IX bis XVII

In der gleichen Weise wie in Beispiel VIII wurden die Beispiele IX bis XII durchgeführt, wobei die eingesetzten Monomere in der nachfolgenden Tabelle beschrieben sind:

| Monomere (Gew.-Tle.) | IX | X | XI | XII | XIII | XIV | XV | XVI | XVII |
|---|---|---|---|---|---|---|---|---|---|
| CH₂=CHCOOCH₂CH₂CₙF₂ₙ₊₁ (Mischung mit n = 6, 8, 10, 12, 14, 16) | 60 | 75 | 70 | 70 | 70 | 70 | 70 | 70 | 75 |
| Methylacrylat | 26,5 | 11,5 | 12,5 | 13,5 | 17,5 | 18,5 | - | 19,5 | 14,5 |
| Methylmethacrylat | - | - | - | - | - | - | 16,5 | | |
| CH₂=C(CH₃)COO(CH₂CH₂O)₈H | | 7,5 | 7,5 | 12,5 | 12,5 | 7,5 7,5 | 7,5 | 7,5 | 7,5 |
| Dimethylaminoethylmethacrylat | 3 | 3 | 2 | 1 | 3 | 3 | 3 | 3 | 3 |
| Acrylamid | 3 | 3 | 3 | 3 | 2 | 1 | 3 | - | - |

### Anwendungsbeispiele 1 bis 7

### Öl- und wasserabweisende Ausrüstung von Papieren auf der Oberfläche

Zu einer 5 %igen Stärkelösung (Kartoffelstärke (Perfectamyl® A 4692)), die mit Leitungswasser (ca. 17° dH = deutscher Härte) hergestellt worden war, wurden 2,0 Gew.-% (bezogen auf das Flottengewicht) einer Fluorcarbondispersion (Beispiele I-VII) zugegeben. Mit dieser Flotte wurden Rohpapiere, bestehend aus 50 % gebleichtem Birkensulfat- und 50 % gebleichtem Kiefernsulfat-Zellstoff mit einem Mahlgrad von 35° SR, in der Laborleimpresse (Fa. Mathis) (Naßaufnahme: 80 %) ausgerüstet und 2 min bei 90°C im Trockenzylinder getrocknet. Die ausgerüsteten Papiere wurden nach einer 2-stündigen Konditionierung in der Raumluft durch Cobb-Test mit Wasser und Terpentinöl sowie Tropfentest mit Terpentinöl bzw. Xylol geprüft.

### Öl- und wasserabweisende Ausrüstung von Papieren in der Masse

Eine Mischung aus 50 % Birkensulfat-Zellstoff und 50 % Kiefernsulfat-Zellstoff wurde auf ca. 35° SR gemahlen und auf eine Stoffdichte von 2,5 % mit Leitungswasser (ca. 17° dH) eingestellt.

140 ml dieser Zellstoffsuspension wurden mit 150 ml Leitungswasser verdünnt. Dazu gab man nacheinander 4,0 Gew.-% einer Fluorcarbondispersion (Beispiel I-VII) sowie 0,3 Gew.-% eines Retentionsmittels (auf der Basis eines Polyamidamins, z.B. Retaminol H der Bayer AG) aus 1 %iger Verdünnung zu, wobei sich die Gewichtsangaben der Fluorcarbondispersion und des Retentionsmittels auf die Papiermasse beziehen. Nach ca. 20 sec. Rühren wurde auf einem Handblattbildner das Papierblatt gebildet. Die Blätter wurden zwischen Filzen abgepreßt, im Trockenzylinder 4 min bei 90°C getrocknet. Die Prüfung wurde wie bei den auf der Oberfläche ausgerüsteten Papieren durchgeführt.

In der nachfolgenden Tabelle sind alle Ergebnisse zusammengefaßt; der Index a nach der Beispiel-Nr. gibt die Ergebnisse für die Oberflächenausrüstung, der Index b für die Ausrüstung in der Masse wieder.

| Bsp. | Dispersion | Cobb-Test (Wasser) (g/m²) | Cobb-Test (Terpentinöl) (g/m²) | Tropfentest Terpentinöl (min) | Tropfentest Xylol (min) |
|---|---|---|---|---|---|
| 1a | I | 16,2 | 2,8 | >180 | 61 |
| 1b | I | 20,0 | 2,2 | >180 | 65 |
| 2a | II | 17,5 | 3,0 | >180 | 66 |
| 2b | II | 19,5 | 2,5 | >180 | 67 |
| 3a | III | 17,1 | 2,5 | >180 | 62 |
| 3b | III | 21,5 | 2,0 | >180 | 65 |
| 4a | IV | 21,0 | 6,5 | 165 | 55 |
| 4b | IV | 25,0 | 4,3 | 170 | 59 |
| 5a | V | 17,2 | 3,0 | >180 | 62 |
| 5b | V | 33 | 6,3 | 160 | 51 |
| 6a | VI | 17,6 | 3,5 | >180 | 65 |
| 7a | VII | 16,3 | 2,2 | >180 | 69 |

Die Beispiele 1 bis 3 zeigen, daß bei Verwendung von Methylacrylat zur Herstellung der Fluorcarbondispersionen besonders gute Ergebnisse sowohl bei der Ausrüstung auf der Papieroberfläche als auch in der Papiermasse erhalten wurden.

Beispiel 4 zeigt, daß bei Verwendung von Methylacrylat deutlich bessere Resultate als bei der Verwendung von Methylmethacrylat erhalten werden.

Bei den Beispielen 5 bis 7, bei denen Fluorcarbondispersionen mit erhöhtem hydrophilem Anteil durch Polyethylenoxidmonomethylacrylat (Monomer III) eingesetzt wurden, wurde nach wie vor eine sehr gute Ausrüstung auf der Papieroberfiäche erhalten. Die Ergebnisse bei der Ausrüstung in Masse wurden jedoch umso schlechter, je geringer der Gehalt an Dimethylaminoethylmethacrylat war. Diese Beispiele zeigen, daß die Zusammensetzung der Fluorcarbonharze bezüglich der hydrophilen Komponenten ausgewogen sein muß.

### Anwendungsbeispiele 8 bis 17

### Öl- und wasserabweisende Ausrüstung von Papieren auf der Oberfläche

Zu einer 5 %igen Stärkelösung (Kartoffelstärke (Perfectamyl® A 4692)), die mit Leitungswasser (ca. 17° dH = deutscher Härte) hergestellt worden war, wurden 2,0 Gew.-% (bezogen auf das Flottengewicht) einer Fluorcarbondispersion (Beispiele VIII-XVII) zugegeben. Mit dieser Flotte wurden Rohpapiere, bestehend aus 50 % gebleichtem Birkensulfat- und 50 % gebleichtem Kiefernsulfat-Zellstoff mit einem Mahlgrad von 35° SR, in der Laborleimpresse (Fa. Mathis) (Naßaufnahme: 80 %) ausgerüstet und 2 min bei 90°C im Trockenzylinder getrocknet. Die ausgerüsteten Papiere (80 g/m²) wurden nach einer 2-stündigen Konditionierung in der Raumluft durch Cobb-Test mit Wasser sowie Tropfentest mit Terpentinöl bzw. Xylol geprüft. In der nachfolgenden Tabelle sind die Ergebnisse der Oberflächenausrüstung zusammengefaßt.

| Bsp. | Dispersion | Cobb-Test Wasser, g/m² | Tropfentest Terpentinöl (min) | Tropfentest Xylol (min) |
|---|---|---|---|---|
| 8 | VIII | 19,1 | >240 | 58 |
| 9 | IX | 26,0 | 195 | 45 |
| 10 | X | 18,5 | >240 | 60 |
| 11 | XI | 20,5 | >240 | 61 |
| 12 | XII | 19,3 | >240 | 63 |
| 13 | XIII | 24,5 | >240 | 57 |
| 14 | XIV | 25,0 | >240 | 56 |
| 15 | XV | 28,0 | 230 | 53 |
| 16 | XVI | 25,1 | 210 | 48 |
| 17 | XVII | 24,5 | 230 | 54 |

### Anwendungsbeispiele 18 bis 27

### Öl- und wasserabweisende Ausrüstung von Papieren in der Masse

Eine Mischung aus 70 % Birkensulfat-Zellstoff und 30 % Kiefernsulfat-Zellstoff, die zusätzlich 25 % CaCO₃ enthält, wurde auf ca. 35° SR gemahlen und auf eine Stoffdichte von 2,5 % mit Leitungswasser (ca. 17° dH) eingestellt.

140 ml dieser Zellstoffsuspension wurden mit 150 ml Leitungswasser verdünnt. Dazu gab man nacheinander 3,0 Gew.-% einer Fluorcarbondispersion (Beispiel VIII-XVII) sowie 0,3 Gew.-% eines Retentionsmittels (auf der Basis eines Polyamidamins, z.B. Retaminol H der Bayer AG) aus 1 %iger Verdünnung zu, wobei sich die Gewichtsangaben der Fluorcarbondispersion und des Retentionsmittels auf die Papiermasse beziehen. Nach ca. 20 sec. Rühren wurde auf einem Handblattbildner das Papierblatt gebildet. Die Blätter (80 g/m²) wurden zwischen Filzen abgepreßt, im Trockenzylinder 4 min bei 90°C getrocknet. Die Prüfung wurde wie bei den auf der Oberfläche ausgerüsteten Papieren durchgeführt.

In der nachfolgenden Tabelle sind die Ergebnisse der Ausrüstung in der Masse zusammengefaßt.

| Bsp. | Dispersion | Cobb-Test (Wasser) (g/m²) | Tropfentest Terpentinöl (min) | Tropfentest Xylol (min) |
|---|---|---|---|---|
| 18 | VIII | 19,5 | >240 | 59 |
| 19 | IX | 25,1 | 200 | 49 |
| 20 | X | 17,3 | >240 | 60 |
| 21 | XI | 22,1 | >240 | 58 |
| 22 | XII | 20,8 | >240 | 61 |
| 23 | XIII | 23,3 | >240 | 55 |
| 24 | XIV | 24,0 | >240 | 56 |
| 25 | XV | 26,3 | >240 | 55 |
| 26 | XVI | 26,5 | 235 | 50 |
| 27 | XVII | 23,3 | 240 | 53 |

### Anwendungsbeispiele 28 bis 31

### Öl- und wasserabweisende Ausrüstung in der Masse

Eine Mischung aus 50 % Schrenzpapier und 50 % Tageszeitungen (Altpapier) wurde statt des Birkensulfat- und Kiefernsulfat-Zellstoffes eingesetzt. Es wurden 4,0 Gew.-% einer Fluorcarbondispersion (Bsp. VIII, X, XVI, XVII) eingesetzt (Ergebnisse in der nachfolgenden Tabelle).

| Bsp. | Dispersion | Cobb-Test (Wasser, g/m²) | Tropfentest Terpentinöl (min) | Tropfentest Xylol (min) |
|---|---|---|---|---|
| 28 | VIII | 18,2 | >240 | 49 |
| 29 | X | 17,4 | >240 | 52 |
| 30 | XVI | 21,3 | 235 | 24 |
| 31 | XVII | 19,5 | >240 | 32 |

Die Copolymerisate aus den Beispielen XVI und XVII (ohne Acrylamid) belegen, daß der Einsatz von Acrylamid (Komponente e)) in den erfindungsgemäßen Copolymerisaten VIII und X weitere eindeutige Verbesserungen bei der Ausrüstung in der Papiermasse zur Folge hat.

## Patentansprüche

1. Öl- und wasserabweisende Papiere, ausgerüstet auf der Oberfläche oder in der Masse der Papiere mit fluorhaltigen Copolymerisaten aus
a) Perfluoralkylgruppen enthaltenden Acrylaten der Formel CH₂=CR¹-COO-X-CₙF₂ₙ₊₁ (I),
b) Monomeren der Formel CH₂=CR²-COO-R³ (II),
c) Monomeren der Formel CH₂=CR⁴-COO-(CH₂CH₂O)ₘ-R⁵ (III) und
d) Monomeren der Formel CH₂=CR⁶-COO-CH₂CH₂-N(R⁷,R⁸) (IVa)
oder in salzartiger Form der Formel
[CH₂=CR⁶-COO-CH₂CH₂-N(R⁷,R⁸,R⁹)]^{⊕}Y^{⊖} (IVb)
oder in N-oxidierter Form der Formel 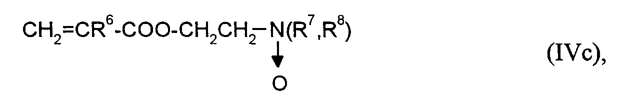
e) Monomeren der Formel CH₂=CR¹⁰CONHR¹¹ (V)
wobei in den Formeln
n eine Zahl von 4 bis 20, bevorzugt von 6 bis 16 oder ein Gemisch von verschiedenen Werten von n und
m eine Zahl von 3 bis 20 oder ein Gemisch von verschiedenen Werten von m bedeuten,
X für -(CH₂)ₒ-, SO₂NR¹²CH₂CHR¹³- oder -O-(CH₂)ₒ- steht, wobei o eine Zahl von 1 bis 4 bedeutet,
R¹, R², R⁴, R⁶, R¹⁰ und R¹³ unabhängig voneinander Wasserstoff oder Methyl bedeuten,
R³, R⁷, R⁸, R⁹ und R¹² unabhängig voneinander geradkettiges oder verzweigtes C₁-C₄-Alkyl darstellen,
R⁵ Wasserstoff oder geradkettiges oder verzweigtes C₁-C₈-Alkyl bedeutet und
R¹¹ Wasserstoff, geradkettigtes oder verzweigtes C₁-C₁₂-Alkyl, Benzyl, -CH₂OH, -CH₂OCH₃, -CH₂OC₄H₉, -(CH₂)₃N(CH₃)₂ oder -(CH₂)N^{⊕}(CH₃)₃ Cl^{⊖} bedeutet und
Y^{⊖} ein Äquivalent eines 1-3 wertigen Anions bedeutet,
wobei die Copolymeriste die Monomeren in Mengen von a) = 50 bis 90 Gew.-%, b) = 1 bis 35 Gew.-%, c) = 3 bis 20 Gew.-%, d) = 1 bis 20 Gew.-% und e) = 0 bis 10 Gew.-%, alles bezogen auf die Gesamtmenge der Comonomeren, enthalten und wobei zur Ausrüstung auf der Oberfläche 0,1 bis 2,0 Gew.-% der obigen Copolymerisate, bezogen auf die Papiermasse, und zur Ausrüstung in der Masse der Zellstoffsuspension (Pulpe) 0,5 bis 2,0 Gew.-% der obigen Copolymerisate, bezogen auf die Papiermasse, eingesetzt werden, als Wasser nicht enthärtetes Leitungswasser eingesetzt werden kann und neben den obigen Copolymerisaten Stärke und Retentionsmittel eingesetzt werden können, wobei die Ausrüstungsmittel nach US 5.247.008 ausgenommen sind.

2. Verfahren zur Herstellung öl- und wasserabweisender Papiere durch Ausrüstung auf der Oberfläche oder in der Masse der Papiere mit öl- und wasserabweisenden Substanzen, dadurch gekennzeichnet, daß zur Ausrüstung fluorhaltige Copolymerisate aus
a) Perfluoralkylgruppen enthaltenden Acrylaten der Formel CH₂=CR¹-COO-X-CₙF₂ₙ₊₁ (I),
b) Monomeren der Formel CH₂=CR²-COO-R³ (II),
c) Monomeren der Formel CH₂=CR⁴-COO-(CH₂CH₂O)ₘ-R⁵ (III),
d) Monomeren der Formel CH₂=CR⁶-COO-CH₂CH₂-N(R⁷,R⁸) (IVa)
oder in salzartiger Form der Formel
[CH₂=CR⁶-COO-CH₂CH₂-N(R⁷,R⁸,R⁹)]^{⊕}Y^{⊖} (IVb)
oder in N-oxidierter Form der Formel 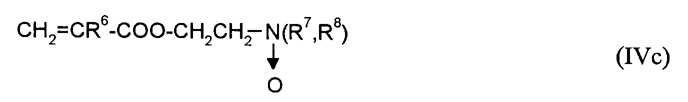 und
e) Monomeren der Formel CH₂=CR¹⁰CONHR¹¹ (V)
wobei in den Formeln
n eine Zahl von 4 bis 20, bevorzugt von 6 bis 16 oder ein Gemisch von verschiedenen Werten von n und
m eine Zahl von 3 bis 20 oder ein Gemisch von verschiedenen Werten von m bedeuten,
X für -(CH₂)ₒ-, SO₂NR¹²CH₂CHR¹³- oder -O-(CH₂)ₒ- steht, wobei o eine Zahl von 1 bis 4 bedeutet,
R¹, R², R⁴, R⁶, R¹⁰ und R¹³ unabhängig voneinander Wasserstoff oder Methyl bedeuten,
R³, R⁷, R⁸, R⁹ und R¹² unabhängig voneinander geradkettiges oder verzweigtes C₁-C₄-Alkyl darstellen,
R⁵ Wasserstoff oder geradkettiges oder verzweigtes C₁-C₈-Alkyl bedeutet und
R¹¹ Wasserstoff, geradkettiges oder verzweigtes C₁-C₁₂Alkyl, Benzyl, -CH₂OH, -CH₂OCH₃, -CH₂OC₄H₉, -(CH₂)₃N(CH₃)₂ oder -(CH₂)N^{⊕}(CH₃)₃ Cl^{⊖} bedeutet und
Y^{⊖} ein Äquivalent eines 1-3 wertigen Anions bedeutet,
wobei die Copolymerisate die Monomeren in Mengen von a) = 50 bis 90 Gew.-%, b) = 1 bis 35 Gew.-%, c) = 3 bis 20 Gew.-%, d) = 1 bis 20 Gew.-% und e) = 0 bis 10 Gew.-%, alles bezogen auf die Gesamtmenge der Comonomeren, enthalten und wobei zur Ausrüstung auf der Oberfläche 0,1 bis 2,0 Gew.-% der obigen Copolymerisate, bezogen auf die Papiermasse, und zur Ausrüstung in der Masse der Zellstoffsuspension (Pulpe) 0,5 bis 2,0 Gew.-% der obigen Copolymerisate, bezogen auf die Papiermasse, eingesetzt werden, als Wasser nicht enthärtetes Leitungswasser eingesetzt werden kann und neben den obigen Copolymerisaten Starke und Retentionsmittel eingesetzt werden können, wobei die Ausrüstungsmittel nach US 5.247.008 ausgenommen sind.

3. Fluorhaltige Copolymerisate aus
a) 50 bis 90 Gew.-% an Perfluoralkylgruppen enthaltenden Acrylaten der Formel CH₂=CR¹-COO-X-CₙF₂ₙ₊₁ (I),
b) 1 bis 35 Gew.-% an Monomeren der Formel CH₂=CR²-COO-R³ (II),
c) 3 bis 20 Gew.-% an Monomeren der Formel CH₂=CR⁴-COO-(CH₂CH₂O)ₘ-R⁵ (III),
d) 1 bis 20 Gew.-% an Monomeren der Formel CH₂=CR⁶-COO-CH₂CH₂-N(R⁷,R⁸) (IVa)
oder in salzartiger Form der Formel
[CH₂=CR⁶-COO-CH₂CH₂-N(R⁷,R⁸,R⁹)]^{⊕}Y^{⊖} (IVb)
oder in N-oxidierter Form der Formel 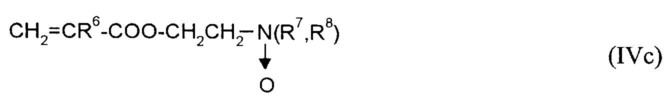 und
e) 0,5 bis 10 Gew.-% an Monomeren der Formel CH₂=CR¹⁰CONHR¹¹ (V)
wobei in den Formeln
n eine Zahl von 4 bis 20, bevorzugt von 6 bis 16 oder ein Gemisch von verschiedenen Werten von n und
m eine Zahl von 3 bis 20 oder ein Gemisch von verschiedenen Werten von m bedeuten,
X für -(CH₂)ₒ-, SO₂NR¹²CH₂CHR¹³- oder -O-(CH₂)ₒ- steht, wobei o eine Zahl von 1 bis 4 bedeutet,
R¹, R², R⁴, R⁶, R¹⁰ und R¹³ unabhängig voneinander Wasserstoff oder Methyl bedeuten,
R³, R⁷, R⁸, R⁹ und R¹² unabhängig voneinander geradkettiges oder verzweigtes C₁-C₄-Alkyl darstellen,
R⁵ Wasserstoff oder geradkettiges oder verzweigtes C₁-C₈-Alkyl bedeutet und
R¹¹ Wasserstoff, geradkettigtes oder verzweigtes C₁-C₁₂-Alkyl, Benzyl, -CH₂OH, -CH₂OCH₃, -CH₂OC₄H₉, -(CH₂)₃N(CH₃)₂ oder -(CH₂)N^{⊕}(CH₃)₃ Cl^{⊖} bedeutet und
Y^{⊖} ein Äquivalent eines 1-3 wertigen Anions bedeutet.

4. Papiere nach Anspruch 1, ausgerüstet mit Copolymeren der Zusammensetzung a) = 60 bis 90 Gew.-%, b) = 1 bis 35 Gew.-%, c) = 3 bis 20 Gew.-%, d) = 1 bis 20 Gew.-% und e) = 0 Gew.-%, bevorzugt a) = 65 bis 85 Gew.-%, b) = 2 bis 25 Gew.-%, c) = 3 bis 15 Gew.-%, d) = 1 bis 10 Gew.-% und e) = 0 Gew.-%, wobei die Ausrüstungsmittel nach US 5.247.008 ausgenommen sind.

5. Papiere nach Anspruch 4, ausgerüstet mit Copolymeren der Zusammensetzung a) >75 bis 85 Gew.-%, b) 3 bis 15 Gew.-%, c) 5 bis 15 Gew.-%, d) 2 bis 8 Gew.-% und e) 0 Gew.-%.

6. Papiere nach Ansprüchen 1, 4 und 5, gekennzeichnet durch den Einsatz von Copolymeren, in deren Komponente b) R² Wasserstoff bedeutet.

7. Papiere nach Ansprüchen 1 und 4 bis 6, gekennzeichnet durch den Einsatz von Copolymeren, in denen Komponente b) R³ Methyl bedeutet.

8. Papiere nach den Ansprüchen 1 und 4 bis 7, gekennzeichnet durch den Einsatz von Copolymeren, in deren Komponente c) Methyl und R⁵ Wasserstoff bedeuten und unabhängig hiervon der Index m Werte von 5 bis 9 annimmt.

9. Papiere nach den Ansprüchen 1 und 4 bis 8, gekennzeichnet durch den Einsatz von Copolymeren, in deren Komponente d) R⁷ und R⁸ Methyl und R⁹ Wasserstoff bedeuten und in deren salzartiger Form das Anion Y^{⊖} Chlorid, Acetat, 1/2 Sulfat, C₆-C₁₀-Aryl-, C₇-C₁₅-Aralkyl- oder C₁-C₁₈-Alkyl-sulfonat oder 1/3 Phosphat, bevorzugt 1/3 Phosphat bedeutet.

10. Copolymerisate nach Anspruch 3, gekennzeichnet durch die Bedeutung von R⁶, R⁷ und R⁸ = Methyl und R⁹ = Wasserstoff und in denen (IVb) das Anion Y^{⊖} für Chlorid, Acetat, 1/2 Sulfat, C₆-C₁₀-Aryl-, C₇-C₁₅-Aralkyl- oder C₁-C₁₈-Alkyl-sulfonat oder 1/3 Phosphat, bevorzugt 1/3 Phosphat steht.

11. Copolymerisate nach Ansprüchen 3 und 10, gekennzeichnet durch die Zusammensetzung a) = 65 bis 85 Gew.-% (I), b) = 2 bis 25 Gew.-% (II), c) = 3 bis 15 Gew.-% (III), d) = 1 bis 10 Gew.-%(IV) und e) = 1 bis 8 Gew.-% (V), bevorzugt gekennzeichnet durch die Zusammensetzung a) >65 bis 85 Gew.-% (I), b) 2 bis 25 Gew.-% (II), c) 3 bis 15 Gew.-% (III), d) 1 bis 10 Gew.-% (IV) und e) 1 bis 8 Gew.-% (V).

12. Copolymerisate nach Ansprüchen 3, 10 und 11 gekennzeichnet durch die Bedeutung R¹ = H und X = -CH₂CH₂-.
